**Europäisches Patentamt**

**European Patent Office**

**Office européen des brevets**

(19)

(11) Veröffentlichungsnummer : **0 468 931 A1**

(12) # EUROPÄISCHE PATENTANMELDUNG

(21) Anmeldenummer : **91810598.2**

(22) Anmeldetag : **25.07.91**

(51) Int. Cl.$^5$ : **B62H 3/04**

(30) Priorität : **27.07.90 CH 2513/90**

(43) Veröffentlichungstag der Anmeldung :
**29.01.92 Patentblatt 92/05**

(84) Benannte Vertragsstaaten :
**AT DE NL**

(71) Anmelder : **Gerold, Andres des Louis**
**Schinerstrasse 32**
**CH-3900 Brig (CH)**

(72) Erfinder : **Gerold, Andres des Louis**
**Schinerstrasse 32**
**CH-3900 Brig (CH)**

(74) Vertreter : **Tscherrig, Alois**
**Rechtsanwalt, Furkastrasse 4**
**CH-3900 Brigg (CH)**

(54) **Veloparker.**

(57)     Ein Veloparker für ein oder mehrere Fahrräder, der an bestehenden Einrichtungen wie Parkuhren, Signaltafeln und Abschrankungen montiert ist.

EP 0 468 931 A1

EP 0 468 931 A1

Beim Veloparker handelt es sich um ein Veloparker gemäss Anspruch 1.

Der Veloparker kann im Unterschied zu den bisherigen an bestehenden Konstruktionen wie Parkuhren, Signaltafeln und Abschrankungen montiert werden.

Der Veloparker ermöglicht optimale Platzausnützung, bietet zusätzliche Parkierungsmöglichkeiten und schafft Ordnung im Sinne des Strassenverkehrsgesetzes.

Der Veloparker ist leicht und schnell montierbar.

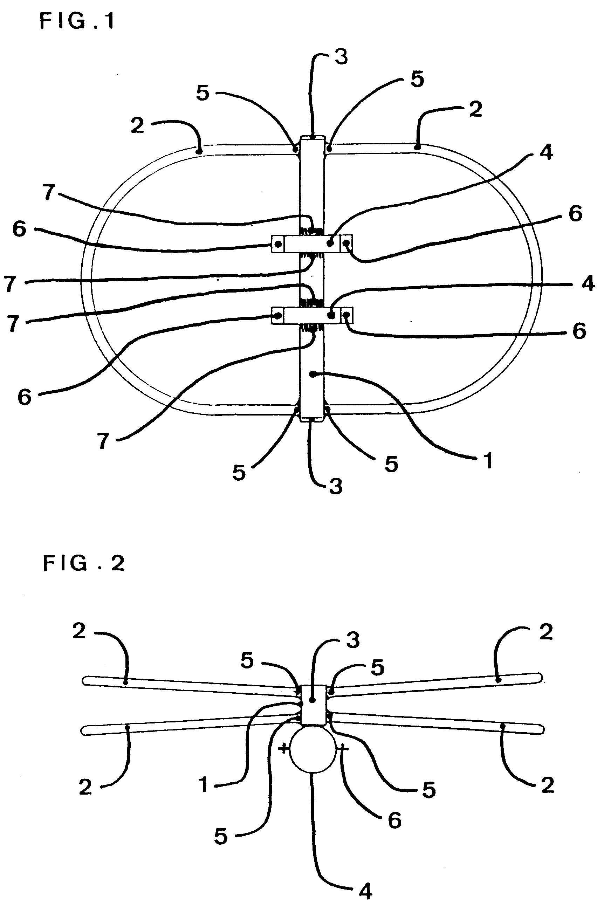

Ein Ausführungsbeispiel für zwei Fahrräder ist in Fig. 1 Seitenansicht und Fig, 2 Draufsicht dargestellt.

**Patentansprüche**

1. Veloparker gekennzeichnet durch zwei nebeneinander verschweissten Rundeisenringen (2), einem innenliegenden Vierkantstahlprofil (1), einer Rohrbride (4), mit vier Schrauben (6), seitlich angeschweisst.

2. Veloparker gemäss Anspruch 1 gekennzeichnet durch mehrere nebeneinander verschweissten Rundeisenringe.

2

FIG.1

FIG.2

3

EP 0 468 931 A1

Europäisches
Patentamt

**EUROPÄISCHER RECHERCHENBERICHT**

Nummer der Anmeldung

EP 91 81 0598

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| X | US-A-4 047 614 (J.R.RADEK) <br> * Zusammenfassung; Abbildungen * <br> --- | 1,2 | B62H3/04 |
| X | CH-A-293 350 (AKTIENGESELLSCHAFT DER MASCHINENFABRIK VON LOUIS GIROUD) <br> * das ganze Dokument * <br> --- | 1,2 | |
| X | FR-A-1 315 617 (H. MICHEL) <br> * das ganze Dokument * <br> --- | 1,2 | |
| X | DK-A-27 928 (H. JESSEN-GRUNDAHL) <br> * Abbildungen * <br> ----- | 1,2 | |

RECHERCHIERTE
SACHGEBIETE (Int. Cl.5)

B62H

Der vorliegende Recherchenbericht wurde für alle Patentansprüche erstellt

| Recherchenort | Abschlußdatum der Recherche | Prüfer |
|---|---|---|
| DEN HAAG | 04 NOVEMBER 1991 | FRANKS B.G. |

EPO FORM 1503 03.82 (P0403)

4